(19) **Europäisches Patentamt / European Patent Office / Office européen des brevets**

(11) **EP 2 056 079 A2**

(12) **EUROPEAN PATENT APPLICATION**

(43) Date of publication:
**06.05.2009 Bulletin 2009/19**

(51) Int Cl.:
**G01G 19/56** (2006.01)    **D06F 39/00** (2006.01)

(21) Application number: **08167722.1**

(22) Date of filing: **28.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.10.2007 US 929546**
**19.11.2007 US 942359**

(71) Applicant: **General Electric Company**
**Schenectady, NY 12345 (US)**

(72) Inventors:
• **Suel, Richard D. II**
**Louisville, KY 40222 (US)**
• **Hatfield, Edward**
**Louisville, KY 40202 (US)**

• **Kollipara, Meher P.**
**Louisville, KY 40241 (US)**
• **Dougherty, John James**
**Collegeville, PA 19426 (US)**
• **FILIPPA, Mariano P**
**Louisville, KY 40241 (US)**
• **Holmes, John S.**
**Sellersburg, IN 47172 (US)**

(74) Representative: **Illingworth-Law, William Illingworth**
**GE International Inc.**
**London Patent Operation**
**15 John Adam Street**
**London**
**WC2N 6LU (GB)**

(54) **MEASURING APPARATUS AND METHOD**

(57)    A method and apparatus is provided for determining a measurement of a portion of a load in a basket (25) that is rotatably supported provided, the method includes: a) determining, a dry load measurement; b) spinning, the basket (25) that is rotatably supported in order to gradually remove the liquid from the load, wherein the liquid is removed substantially by centrifugal force on the basket (25) that is rotatably supported; c) determining a wet load measurement, wherein the dry load measurement is less than the wet load measurement; d) comparing the dry load measurement to the wet load measurement to determine a remaining liquid measurement; and e) repeating c) and d) until the remaining liquid measurement substantially is within a predetermined percentage threshold of about 0 percent to about 50 percent of the wet load measurement.

FIG. 1

**Description**

BACKGROUND OF THE INVENTION

Field of the Invention

The present disclosure is related to measuring an aspect of a load supported by a container. More particularly, the present disclosure is related to measuring a size of a load in a tub or basket that is subject to a rotational acceleration.

Description of Related Art

Vertical axis washing machines, also known as top loading washing machines, represent a large portion of the overall washing machine consumer market in the United States. Horizontal axis washing machines represent a smaller segment of the United State market and abroad typically represent a larger portion of the overall washing machine consumer market.

Most vertical axis washing machines include a spin cycle for removing water and/or detergents from the laundry using centrifugal force and spinning a wash load tub, also referred to as a laundry tub ("tub") or basket. During a typical spin cycle, the motor, typically an induction motor, of the washing machine spins the tub at relatively high speed(s).

Historically induction motors used in washers have been single phase induction motors or PSC induction motors. More recently 3-phase induction motors, have been used in some commercially available washers. The 3-phase motors in washers for home use are typically powered by standard single phase AC household electric power. As part of a 3-phase induction motor washing machine, a circuit associated with the motor converts the single phase AC household electric power to three phase power; the three phase power is better at motor starting and operates more efficiently than single phase power.

A simplified explanation of an induction motor, ignoring losses follows: The induction motor has a rotor with a short-circuited winding inside a stator with a rotating magnetic field. The flux from the rotating field induces a current flow in the rotor. The frequency of the current flowing is equal to the difference between the rotational speed of the stator field and the rotational speed of the rotor. This difference in speed, or frequency, of the stator magnetic field and the rotor magnetic field is known as the slip.

The rotor current causes a rotor magnetic field, which is spinning relative to the rotor at the slip frequency and relative to the stator field, at the same slip frequency. The interaction between rotor magnetic field and the stator magnetic field generates a torque in the rotor.

A washing machine wash cycle has various modes such as fill, drain and spin, agitation, and spin. Load sensing can occur before, during or after various segments of the wash cycle. The weight of a load of clothes loaded into a clothes washer for washing is an important parameter in determining the proper amount of water and detergent to be used for the wash cycle. Large clothes loads require larger quantities of water than do small loads. Better clothes washability and significant water and energy savings can be achieved when the proper amount of water is filled into the washer tub for a given clothes load. Too much water or detergent is wasteful, and too little of either will generally adversely affect the effectiveness of the washing, and may result in increased energy consumption due to a higher load on the motor as a result of the inability of the clothes to move freely in the water. Additionally, load size may aid in determination of max spin speed and degree of load imbalance. For example, a 1 lb. load with 0.5 lb. imbalance may be more severe than a 10 lb. load with 0.5 lb. imbalance.

Knowing the amounts of water and detergent used in the wash cycle can be helpful in providing an efficiently run washing machine. Spin cycles typically run for a pre-determined amount of time based on very generic information such as the user selected load size. Because the load size is generically selected and is not based upon an actual load size, the washer spin cycle can run for more (or less) time than is needed to extract liquid such as water or water mixed with detergent from the load, which consumes more energy than needed, causes greater wear on the load, takes more time to perform and is less effective at extraction.

Techniques or methods of estimation of the load of clothes loaded into a washer employed by the washer itself are desirable in that it eliminates guesswork on the part of the machine operator which can lead to improper water fill or use of an improper amount of detergent and improper spin time for appropriate liquid extraction. Knowing load size can also prevent damage to the washer by limiting max speed and prevent wear on the load by limiting the amount of agitation performed. Prior art techniques include displacement sensors mounted at tub springs; magnet and coil pickup sensing relative displacement of tub from chassis; and ultrasonic transducers. Prior art washing machines that use sensing hardware are costly due to the need for dedicated sensing hardware.

Accordingly, there is a need for a washing machine that overcomes, alleviates, and/or mitigates one or more of the aforementioned and other deleterious effects of prior art washing machines.

BRIEF SUMMARY OF THE INVENTION

A washing machine is provided that includes measuring a load in a washer with a motor. In one embodiment, an exemplary method of the present invention provides for a method of measurement, the method is further described as a method of determining a measurement of a portion of a load in a basket that is rotatably supported where the basket that is rotatably supported defines at least one aperture. The method includes a) determining, at a first time, a dry load measurement; b) spinning, at a time after the first time, the basket that is rotatably supported in order to gradually remove the liquid from the load, wherein the liquid is removed substantially by centrifugal force on the basket that is rotatably supported and wherein liquid exits the basket that is rotatably supported, through the at least one aperture of the is rotatably supported basket; c) determining at a second time, a wet load measurement, wherein the dry load measurement is less than the wet load measurement; d) comparing the dry load measurement to the wet load measurement to determine a remaining liquid measurement; and e) repeating c) and d) until the remaining liquid measurement substantially is within a predetermined percentage threshold of about 0 percent to about 50 percent of the wet load measurement.

In another embodiment, an exemplary apparatus of the present invention includes a washer comprising: a tub having a load therein and the tub being configured to receive a liquid therein and to remove the liquid therefrom; and a control circuit configured to execute a load measurement formula used to determine a measurement of the load with and without the liquid in the tub; wherein a dry load measurement without the liquid and a wet load measurement with the liquid are taken at first and second times, respectively, are used to determine a remaining liquid measurement, and wherein the wet load measurement is thereafter repeated as liquid is removed from the tub and additional remaining liquid measurements are carried out based on the repeated wet load measurements until the remaining liquid measurement substantially is within a predetermined range of between about 0 percent to about 50 percent of the wet load measurement.

Another exemplary embodiment of the present invention includes: A computer program product comprising: a program storage device readable by a circuit interrupter, tangibly embodying a program of instructions executable by the circuit interrupter to perform method of determining a measurement of a portion of a load in a basket that is rotatably supported where the basket that is rotatably supported defines at least one aperture, the method including: a) determining, at a first time, a dry load measurement; b) spinning, at a time after the first time, the basket that is rotatably supported in order to gradually remove the liquid from the load, wherein the liquid is removed substantially by centrifugal force on the basket that is rotatably supported and wherein liquid exits the basket that is rotatably supported, through the at least one aperture of the is rotatably supported basket; c) determining at a second time, a wet load measurement, wherein the dry load measurement is less than the wet load measurement; d) comparing the dry load measurement to the wet load measurement to determine a remaining liquid measurement; and e) repeating c) and d) until the remaining liquid measurement substantially is within a predetermined percentage threshold of about 0 percent to about 50 percent of the wet load measurement.

The above brief description sets forth rather broadly the more important features of the present invention in order that the detailed description thereof that follows may be better understood, and in order that the present contributions to the art may be better appreciated. There are, of course, additional features of the invention that will be described hereinafter and which will be for the subject matter of the claims appended hereto.

In this respect, before explaining several embodiments of the invention in detail, it is understood that the invention is not limited in its application to the details of the construction and to the arrangements of the components set forth in the following description or illustrated in the drawings. The invention is capable of other embodiments and of being practiced and carried out in various ways. Also, it is to be understood, that the phraseology and terminology employed herein are for the purpose of description and should not be regarded as limiting.

As such, those skilled in the art will appreciate that the conception, upon which disclosure is based, may readily be utilized as a basis for designing other structures, methods, and systems for carrying out the several purposes of the present invention. It is important, therefore, that the claims be regarded as including such equivalent constructions insofar as they do not depart from the spirit and scope of the present invention.

Further, the purpose of the foregoing Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. Accordingly, the Abstract is neither intended to define the invention or the application, which only is measured by the claims, nor is it intended to be limiting as to the scope of the invention in any way.

Further, the purpose of the foregoing Paragraph Titles used in both the background and the detailed description is to enable the Patent Office and the public generally, and especially the scientists, engineers and practitioners in the art who are not familiar with patent or legal terms or phraseology, to determine quickly from a cursory inspection the nature and essence of the technical disclosure of the application. Accordingly, the Paragraph Titles are neither intended to define the invention or the application, which only is measured by the claims, nor are they intended to be limiting as to the scope of the invention in any way.

The above-described and other features and advantages of the present disclosure will be appreciated and understood by those skilled in the art from the following detailed description of embodiments provided by way of example only, drawings, and appended claims.

BRIEF DESCRIPTION OF THE SEVERAL VIEWS OF THE DRAWINGS

FIG. 1 is a sectional view of a vertical axis washing machine according to an exemplary embodiment of the present invention;

FIG. 2 illustrates a cross sectional view of various elements of the exemplary horizontal axis washer of the present invention;

FIG. 3 illustrates a side view of the exemplary washer of the present invention along lines 2-2 of the cross sectional view of FIG. 2;

FIG. 4 illustrates a functional block diagram of an exemplary embodiment of the washer of the present invention;

FIG. 5a,b illustrates an exemplary method of the present invention;

FIG. 5c illustrates another exemplary method of the present invention;

FIG. 6 is a graph of voltage vs. time, illustrating frequency and amplitude of an input voltage to the washer motor;

FIG. 7a is a graph of speed vs. time, illustrating frequency and amplitude of an input voltage to the washer motor, where a positive frequency jump occurs at $t_1$ ;

FIG. 7b is a graph of speed vs. time, illustrating frequency and amplitude of an input voltage to the washer motor, where a negative frequency jump occurs at $t_1$ ;

FIG. 8 illustrates a graph of load size vs. time and a line L plotted on the graph and substantially fitted to the equation for a line and also representative of an equation for load size for an exemplary washer of an embodiment of the present invention;

FIG. 9 illustrates an exemplary graph of load size vs. time including a theoretical load size plot representative of load variation over time for an exemplary embodiment of the present invention.

FIG. 10 is a flowchart illustrating an exemplary embodiment of the present invention.

DETAILED DESCRIPTION OF THE INVENTION

Washing Machine Introduction

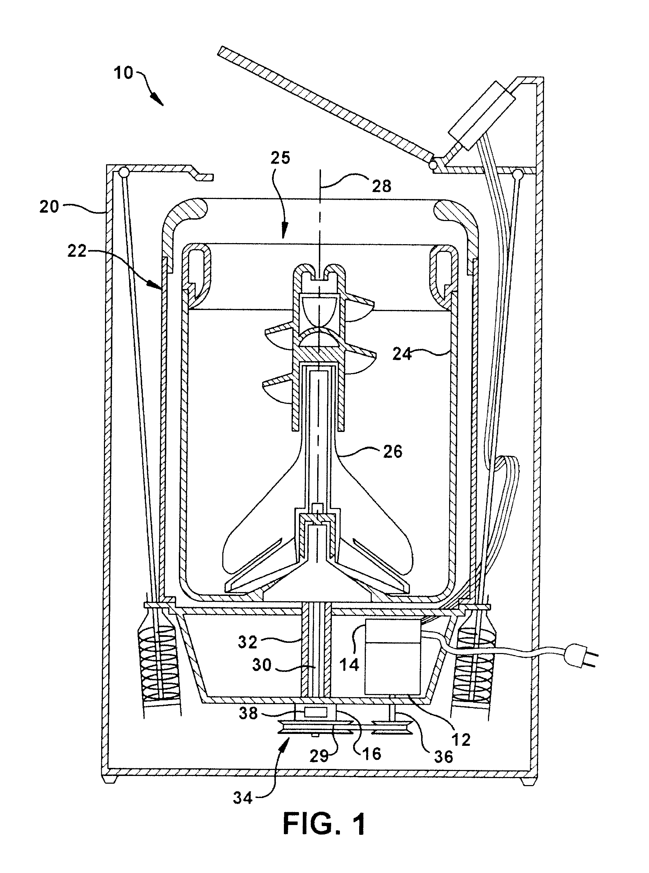

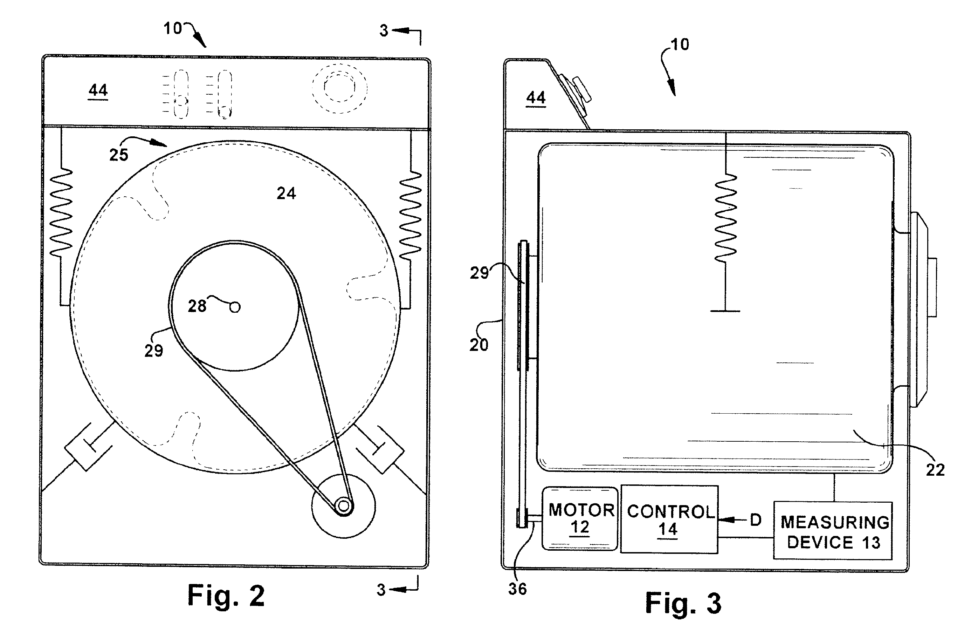

Referring to the drawings and in particular to FIG. 1, a washing machine ("washer") according to an exemplary embodiment of the present invention is illustrated and is generally referred to by reference numeral 10. For purposes of clarity, aspects of washer 10 necessary for understanding of the present disclosure, as well as aspects helpful in understanding the operation of washer 10 are described herein. Washer 10 described herein can be a vertical axis washer 10 as is illustrated in FIG. 1 or a horizontal axis washer 10, as is illustrated in FIGS. 2 and 3. One of ordinary skill in the art can perform the exemplary embodiments of the invention described herein using either configuration. Like reference numerals are used in the horizontal and vertical axis washer illustrations.

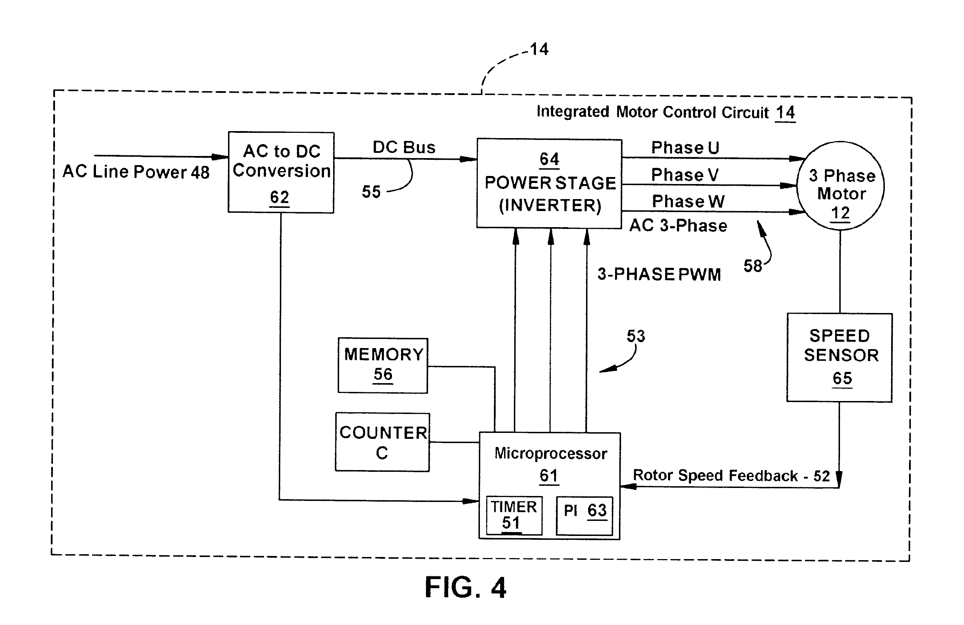

Washer 10 includes a motor 12 and a motor control unit 14. Motor 12 is a three-phase alternating current (AC) induction motor and, in some embodiments includes motor control unit 14 integral therewith. The motor control, integral therewith is referred to herein as integrated control and motor (ICM) or control circuitry. Motor control unit 14 can include circuitry customized for an exemplary embodiment of the present invention. Alternately a motor control circuit that is supplied independently of the motor could be used as can be determined by one of ordinary skill in the art. For purposes of illustration, the independent control circuit 14 is in the same block diagram configuration as the integrated motor control circuit 14 and therefore, not separately illustrated. The washer 10 is provided with input power such as single phase AC power input 48, illustrated in FIG. 4.

Washer 10 includes an outer housing or cabinet 20 supporting a fixed tub 22, a basket or moving tub ("tub") 25, an agitator 26, motor 12, and motor control unit 14 in a known manner. Agitator and basket drive shafts 30, 32 are also illustrated. Basket 25 is configured to hold articles (not shown) such as clothes to be washed. Circuit 14 is configured so that it causes the circuit 14 to control the motor in a manner that results in determination of load size (load not shown). The control circuit includes a counter C and memory 56 for storage of load size data and other appropriate data as may be determined by one of ordinary skill in the art.

During a spin cycle, basket 25 and agitator 26 are configured to be driven by motor 12 via motor drive shaft coupled to drive belt 29 to rotate at a high speed about axis 28. In this manner, liquid within the articles is removed by the centrifugal force imparted by the spin cycle and is allowed to exit the basket through openings (not shown). However, during a washing cycle, agitator 26 is configured to be driven by motor 12 to rotate back-and-forth about axis 28 so that the clothes in the basket are agitated. For example, agitator 26 is secured to an agitator drive shaft 30 and basket 25 is secured to a basket drive shaft 32. Motor 12 is coupled to mode shifter 16 by a transmission 34. In the vertical washer configuration of FIG. 1, transmission 34 is configured to transmit rotary motion imparted on a motor shaft 36 by motor 12 to mode shifter 16 via drive belt 29. In the horizontal washer configuration of FIG. 2, a direct belt drive is configured to transmit rotary motion imparted on a motor shaft 36 by motor 12 to tub 25 via drive belt 29. FIG. 3 illustrates a side view of the exemplary washer of the present invention along lines 2-2 of the cross sectional view of FIG. 2.

During a spin cycle, basket 25 and agitator 26 are configured to be driven by motor 12 to rotate at a high speed about axis 28. In this manner, liquid within the articles is removed by the centrifugal force imparted by the spin cycle and is allowed to exit the basket through openings (not shown). During the spin cycle, basket 25 has an inertial load comprising the inertial load from the articles and inertial load inherent to the basket 25. During spin cycle articles or clothing becomes plastered to the wall of basket 25 at a first speed or plaster speed. Plaster refers to the centrifugal force of the spin cycle pushing the clothing against the wall or structure of the basket. The clothes remain positioned by centrifugal force during a time period the first speed or plaster speed to a second speed or maximum speed of the spinning basket. The plastered speed and maximum speed can be determined by one of ordinary skill in the art.

Load Detection and Liquid Measurement

The exemplary electronic control circuits of the present invention include components such as a microprocessor 61 (see FIG. 4) that can be programmed using a programming language such as C, C++ or assembly language. Alternately the microprocessor could be an application specific integrated circuit (ASIC). The type of microprocessor used in the control circuit could be determined by one of ordinary skill in the art.

Another component illustrated in the examples of the present invention is an AC to DC converter component 62 for converting single phase input power, such as conventional residential voltage of 110v, 60Hz in the US, to DC voltage. Additionally, there is a microprocessor 61 which drives the power stage 64 (inverter) appropriately to convert the DC voltage into 3-phase AC, typically by pulse-width modulation (PWM). The choice of components in the power stage can be determined by one of ordinary skill in the art. For example, the power stage could comprise IGBTs (not shown) and Gate Drivers (not shown). The output of exemplary inverter 64 is 3-phase voltage labeled phases U, V and W. One of ordinary skill in the art would be familiar with the U, V and W phase nomenclature, while others may be familiar with typical/similar phase A, phase B and phase C nomenclature (not shown). Phases U, V and W are illustrated in FIG 4.. The output voltage of the inverter 64 is input voltage 57 to the 3-phase induction motor 12 that is the exemplary motor for the embodiments of the invention described herein.

Closed Loop Technique. The closed loop motor control circuit configuration uses available feedback including motor speed and DC bus (aka bulk) voltage 55. The control circuit 14 adjusts output frequency and amplitude of voltage 57 to the motor 12 to achieve and maintain a desired speed level. The exemplary closed loop motor control circuit configuration of the present invention is used to provide washing machine 10 load size determination. An exemplary closed loop control circuit of the present invention is illustrated in FIG. 4.

In FIG. 4 the exemplary closed loop motor control circuit 14 of the present invention performs washer 10 load detection by adjusting inverter 64 output frequency and amplitude of voltage 57 (also known as motor input frequency and amplitude of voltage 57) to the motor 12. The control circuit outputs a signal to the inverter; the signal causes the inverter to adjust the frequency and amplitude of voltage to the motor 12. The control circuit is important to adjusting inverter output. In an exemplary embodiment of the present invention, the drive system is an Integrated Control 14 and Motor 12 (ICM). However, in other exemplary embodiments of the present invention a motor and separate control circuit may be used in place of the ICM as may be determined by one of ordinary skill in the art. One of ordinary skill in the art would understand that other parameters (for example current or torque) could be used to drive the motor.

Plastering of articles or clothing (not shown) to the drum is a prerequisite to the calculations and/or measurements of an exemplary embodiment of the present invention. Plastering is important because the load substantially stops moving within and relative to the drum. This allows the mechanical speed to stabilize and readies the load for the calculations and/or measurements performed in the exemplary embodiment of the present invention.

A decrease in amplitude of the input voltage to the motor $V_{input-motor}$ causes a decrease in torque and hence an increase in the time $\Delta t$ it takes to reach a target speed $S_{motor}$. Further decreases in amplitude of the input voltage to the motor $V_{input-motor}$ results in greater time increments $\Delta t$ for reaching target speed $S_{motor}$. Thus, decreasing the amplitude of the input voltage to the motor allows for more accurate determination of load size due to a greater time differential $V_{input-motor}$. The decrease in amplitude of the input voltage to the motor $V_{input-motor}$ results in improved accuracy in load size determination to the extent that the amplitude is decreased to a magnitude at which the motor can continue to drive the load to the desired speed. This is the lower limit or minimum predetermined value for input voltage to the motor $V_{input-motor}$. Sufficient torque, provided by input voltage to the motor $V_{input-motor}$ of at least the minimum predetermined value to drive the load to a desired speed is required to obtain, $t_2$, time at which the motor reaches the second motor speed. At an input voltage to the motor $V_{input-motor}$ that is less than the predetermined value, the motor would not accelerate due to lack of sufficient torque and therefore, the equation that is used to solve for load size would be missing a variable, $t_2$, time at which the motor reaches the second motor speed. Hence, solving for load size under such circumstances would not be possible since the second motor speed is not reached in the absence of sufficient torque. It should be noted that there is another limit on the input voltage to the motor $V_{input-motor}$, an upper limit or a maximum predetermined value, which prevents over current to the control.

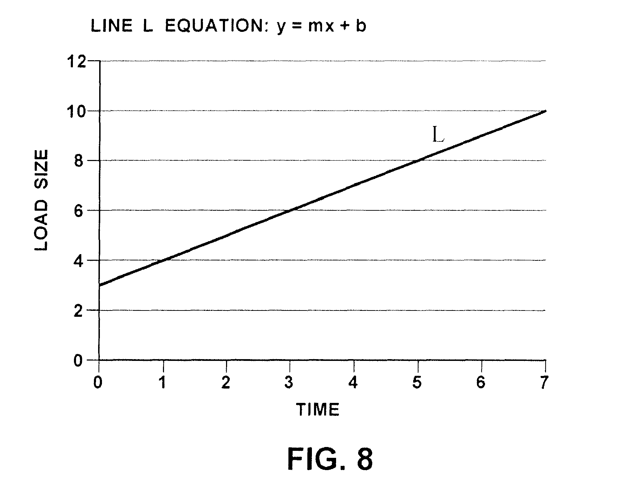

FIG. 8 illustrates a graph of load size vs. time and a line L plotted on the graph and substantially fitted to the equation for a line / load size for an exemplary washer of an embodiment of the present invention. Load size can be calculated using the equation for a line $y = m * x + b$, which corresponds to the line $L$ of the graph of FIG. 8 where time is plotted on the x-axis and load size is plotted on the y-axis. The equation for a line represents various exemplary washer 10 values as follows: $y$ is the load size, m is the slope of the line, and b is the y intercept of the line. In using the equation for a line in the load size calculation performed herein, it should be noted that two exemplary y values are associated with the calculation. The first y value is $y_{known}$ and is used to determine the constants $m$ and $b$ associated with a particular washer 10. The second, $y_{calculate}$, is used to determine load size in the method of the present invention, using the previously solved for constants $m$ and $b$ and time determined during performance of the exemplary method of the preset invention. Both y values $y_{known}$ and $y_{calculated}$ will be further explained below.

In the equation for a line in the load size calculation, $y_{calculated}$, the slope $m$ and the y-intercept $b$ are constants that can be determined by one of ordinary skill in the art, for example, through the use of empirical data and a known *load size(known)* or $y_{known}$ for a washer 10. If we assume that $m$ and $b$ are constants and that we know the load size and the time to reach a desired speed, we are left with the following equation which defines the line $L$ of the graph of FIG.8:

$$y_{known} = m * x + b \qquad (4)$$

In order to solve for load size $y_{calculated}$, the time $x$ (also represented as $\Delta t$) is determined, as well as a Resolution Factor $\dfrac{y}{x} = \dfrac{\Delta y}{\Delta t}$ which is obtained from the line equation, as can be seen from the graph of FIG. 8 also representing the slope m of line L and empirical data and can also be represented as $\dfrac{y_{known}}{\Delta t}$ or $\dfrac{loadsize\,(known)}{\Delta t}$.

Resolution Factor can be expressed as follows using the empirical data from TABLE A:

$$Resolution\ Factor = \frac{y}{x} = \frac{y_{known}}{\Delta t} = \frac{load\ size\ (known)}{\Delta t} \qquad (5)$$

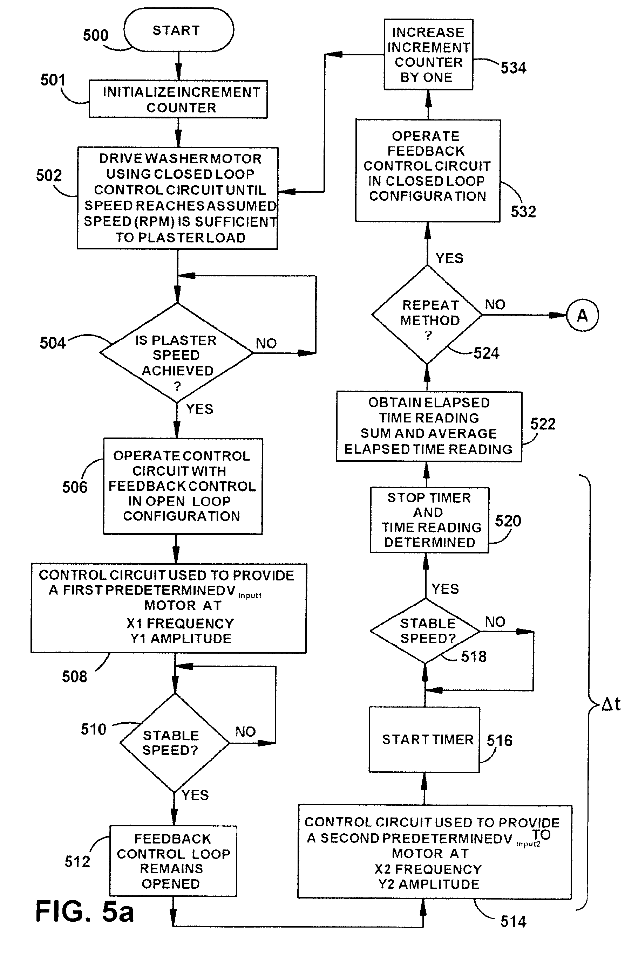

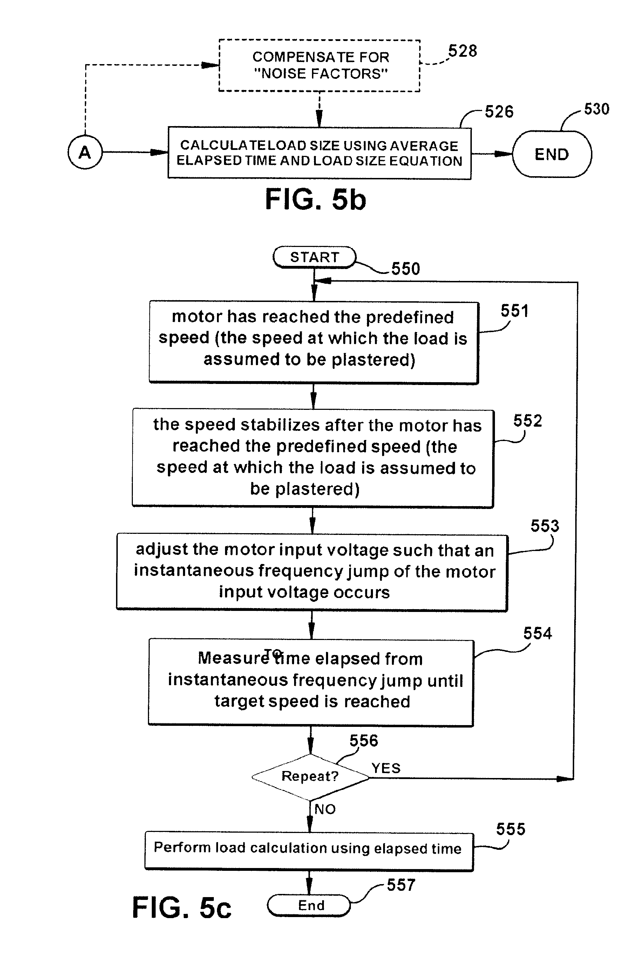

where $\Delta t = t_2 - t_1$, and $t_1$ and $t_2$ correspond to $S_{motor\,1}$ and $S_{motor\,2}$ of the exemplary method of FIG. 5a,b, respectively.

Empirical data of TABLE A for an exemplary washer 10 provides the weight and time measurements used in the exemplary calculations herein.

| LOAD WEIGHT lbs | AVERAGE TIME ms |
| --- | --- |
| 0 | 621 |

(continued)

| LOAD WEIGHT lbs | AVERAGE TIME ms |
|---|---|
| 19.136 | 1392 |

TABLE A

Using the *Line Equation L,* and solving for *m*, the slope of the line, and also the resolution factor $\frac{load\ size\ (known\ )}{\Delta t}$ , provides values for a specific calculated load size $y_{calculated}$ equation for the washer 10. Note that the equation is specific to the motor configuration of the washer 10. For example, empirical data for an exemplary washer 10 provides weight and time measurements of TABLE A. Other calculated load size $y_{calculated}$ equations for other washers could be formulated by one of ordinary skill in the art.

Using empirical data to solve for the slope m where:

$$m = \frac{\Delta y}{\Delta x} = \frac{\Delta weight}{\Delta t} = \frac{19.136 - 0}{1392 - 621} = 0.02484 \tag{6}$$

Next, solve for b (also known mathematically as the y-intercept) using $\Delta x$, *y* and m where:

$$b = y_{known} - (m * \Delta x) = 19.136\,lbs - (0.02484\,lbs\,/\,ms * 1392\,ms) = -15.44\,lbs \tag{7}$$

By using the calculated *Resolution Factor of equation (5)*, and known times $\Delta t = t_2 - t_1$, the load size can be determined as follows:

$$Load\quad size(calculated\quad ) = y_{calculated} = \Delta t * (resolution\,factor) + b \tag{8}$$

The equation for calculated load size equation for exemplary washer 10, solved for above, is:

$$Load\ Size(calculated) = 0.02484 lbs\,/\,ms * \Delta t(ms) - 15.44 lbs \tag{9}$$

With the load size equation determined for washer 10, and a time value $\Delta t$ , typically measured in milliseconds (*ms*) obtained in the execution of the exemplary method of the present invention, *Load Size*(*calculated*) or $y_{calculated}$ can be calculated using the exemplary method of the present invention and spherical data determined using the method.

The load constants include resolution factor and y-intercept for a washer 10; the load constants are either a predetermined value in the ICM, or are be provided from the control circuitry of the washer 10. The load constants, resolution factor and y-intercept, are calculated from the same data set and both change with changes to the data set. Note that if the resolution factor is decreased then the measurable resolution of load detection algorithm is increased. The load constants are used during washer 10 cycles to determine load size which is important with the present variable measurement washers, including variable load size, so that load measurement can be tuned to the washer setting, e.g. washer model, fabric type, user selected load size, etc in order to determine the amount of water, agitation, detergent or other setting or inputs for proper washing. These washer settings may be determined by one of ordinary skill in the art.

It should be noted that a stable motor speed is important to the method of the present invention. Motor speed $S_{motor}$ can be calculated as a function of electrical frequency or the frequency of the voltage to the motor $f_{input}$ and a number of motor poles for the motor of the washer 10. The following equations are used to model the relationship between frequency and motor speed and therefore the speed of the washing machine tub 25 which is driven by the motor:

$$S_{motor} = \frac{120 * f_{input}}{\# \, motorpoles} \quad \text{(Motor Speed Equation)} \quad (10)$$

To move from a first motor speed $S_{motor\,1}$ to a second motor speed $S_{motor\,2}$, the frequency of the voltage to the motor $f_{input}$ is adjusted. Amplitude of the input voltage signal may also be adjusted to the extent that it can provide the desired motor torque.

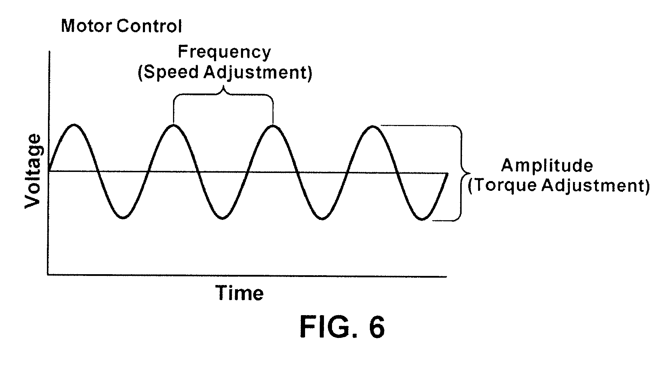

In the following example, Y is used to represent amplitude of voltage; Y corresponds, for example, to the Y-axis of FIG. 6. Furthermore, exemplary electrical frequency or frequency of motor input voltage is represented by $f$. An exemplary control scheme of the present invention substantially instantaneously adjusts electrical frequency $f$ (and optionally amplitude Y) of input (electrical frequency) 58 to the washing machine induction motor 12 in order to obtain a time increment for the mechanical frequency (measured speed $w$) to equal the amplitude of the electrical frequency $f$ is made while being cautious that the increment does not result in high currents. The voltage adjustment of amplitude Y may be required to prevent high currents, or desired to increase resolution. Too great of an amplitude or frequency adjustment to motor input voltage 58 can result in high currents that could damage the gate driver or IGBTs or motor through thermal overheating. The exemplary method of the present invention determines a measured time increment in order to obtain a load size from a predetermined load size formula and the measured time increment. The control circuit 14 is processing a feedback signal during the initial period wherein the load is plastered. The control circuit is not processing a feedback signal during a period wherein the time is measured. The operation of the control circuit 14 in open loop mode can be performed by one of ordinary skill in the art by for example, physically switching open the feedback loop, or disabling the proportional integral (PI) control 63 of the control circuit 14 of the Integrated Motor Control (ICM). Other suitable manners of opening or closing the feedback control loop may be determined by one of ordinary skill in the art.

Induction motor 12 speed is determined using speed sensor 65 of the integrated control 14. The motor 12 is connected to the integrated control circuit 14 via the speed sensor 65. Feedback 52 is obtained by the Integrated Control 14 from speed sensor 65, which can be, for example, a hall sensor (not shown). The feedback 52 of rotor speed to the processor 61 integrated control 14 is processed and output via 3-phase microprocessor output 53 and provided to inverter 64 where it is applied to the voltage at the inverter 64, so that voltage is appropriately adjusted for output and hence motor input voltage thereby motor speed and torque are adjusted during the closed loop operation of plastering which is performed at a slow rate of acceleration so as to spread the load about the tub wall 24.

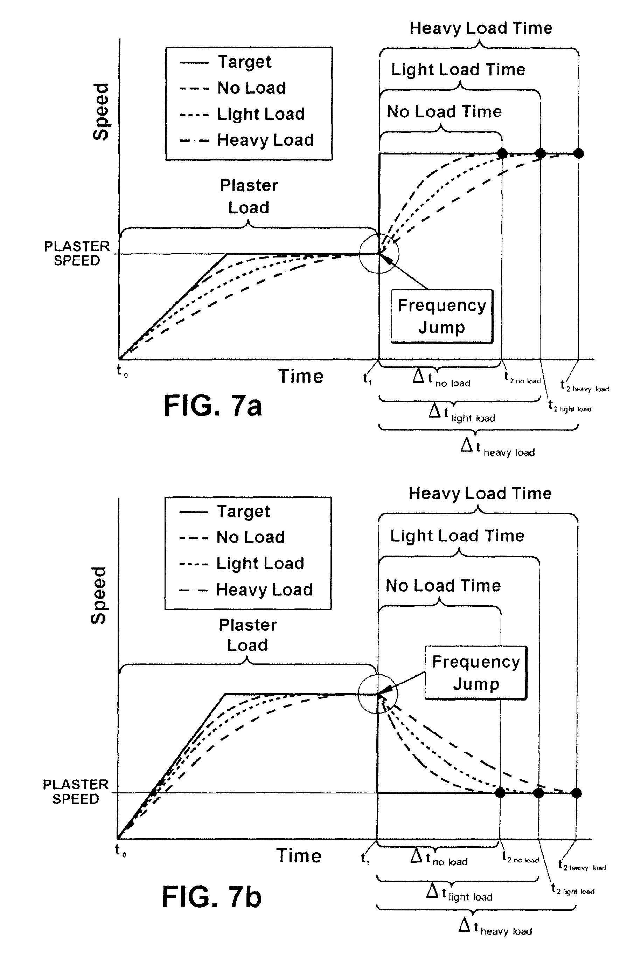

Returning now to the flowchart of FIG. 5a,b, illustrating an exemplary method of the present invention, at operator 500, the method begins. Next at operator 501, increment counter C is initialized. Next at operator 502 the motor 12 is driven using a closed loop control circuit 14 until the initial motor speed $S_{motor\,0}$ is sufficient to plaster the load. It should be noted that an assumption is made that the load is plastered at a speed $S_{plastered}$; hence if $S_{plastered}$ is reached then the clothes are assumed to be plastered. The closed loop is used so that the motor 12 accelerates slowly and the slow centrifugal force spreads out the articles or clothes (not shown) in the tub 25 in a generally even manner. This continues until the clothes are plastered to the wall 24 of the tub 25. At operator 504 a query is made as to whether the assumed plaster speed $S_{plastered}$ has been achieved. If the answer to the query of 504 is NO, the query is repeated until the assumed plaster speed $S_{plastered}$ is achieved and the answer to the query of 504 is YES. During the time that is incremented while the speed is approaching assumed plastered speed $S_{plastered}$, the motor speed is mostly increasing and stabilizing as is illustrated in the graph of FIG. 7a along the X-axis between $t_0$ and $t_1$. FIG. 7a is a graph of speed vs. time, illustrating frequency and amplitude of an input voltage to the washer motor, where a positive frequency jump occurs at $t_1$. FIG. 7b is a graph of speed vs. time, illustrating frequency and amplitude of an input voltage to the washer motor, where a negative frequency jump occurs at $t_1$. Next at operator 506, operate feedback control circuit in open loop configuration.

At operator 508, the control circuit operates to provide a first predetermined input voltage to the motor, the first predetermined input voltage to the motor having a first predetermined electrical frequency X1 and a first predetermined amplitude Y1. It should be noted that in representing predetermined amplitude and frequency, the operators X and Y are used to identify frequency (and amplitude), respectively. In this representation, X and Y correspond to the X-axis and Y-axis for the graph of an exemplary input voltage signal, such as the voltage graph of FIG. 6 (voltage vs. time). The first predetermined frequency X1 and amplitude Y1 are chosen such that a graph of the load line (load size vs. time) produces a well-defined line with a substantially gradual slope. Next, at operator 510 a query is made as to whether there is a stable motor speed. If the answer to the query of 510 is NO, the query is repeated until the motor speed is stable and the answer to the query of 510 is YES. At operator 512 it is noted that after the motor stabilization of operator 510, the feedback control circuit remains in operation in the open loop configuration.

Following operator 512, at operator 514, the control circuit operates to provide a second predetermined input voltage to the motor, the second predetermined input voltage to the motor having a second predetermined electrical frequency X2 and a second predetermined amplitude Y2. Again, it is noted that in representing predetermined amplitude and frequency, the operators X and Y are used to identify frequency (and amplitude), respectively. In this representation, X and Y correspond to the X-axis and Y-axis for the graph of an exemplary input voltage signal, such as the voltage graph of FIG. 6 (voltage vs. time). The second predetermined frequency X2 and amplitude Y2 are chosen such that a graph of the load line (load size vs. time) produces a well-defined line with a substantially gradual slope. A timer 51 (illustrated in FIG. 4) is started substantially upon application of the second predetermined input voltage, illustrated at operator 516. Next, at operator 518 a query is made as to whether there is a stable motor speed. If the answer to the query of 518 is NO, the query is repeated until the motor speed is stable and the answer to the query of 518 is YES. Next, at operator 520, the timer 51 is stopped and a time $\Delta t = t_2 - t_1$ is determined; the time $\Delta t$ is determined where the time values $t_2$ and $t_1$ obtained using timer 51, correspond to $t_1$ timer 51 start time and $t_2$ timer 51 stop time, respectively. Operator 522 follows and an elapsed time reading sum is calculated as well as average elapsed time reading which uses the formula (11) as follows:

$$Average \ \Delta t = \overline{\Delta t} = \frac{\sum_{C}^{C+1} t_2 - t_1}{C} \qquad (11)$$

Where C is the increment counter initialized to 1 at operator 501 and incremented at operator 534.

Next, at operator 524, a query is made as to whether the operators 502 through 522 should be repeated. If the answer to the query of operator 524 is NO, then operator 526 follows operator 524, and a load size is calculated based upon the average time determination of operator 522. The load calculation of operator 522 uses the load size equation for the specific exemplary washer, for example, equation (9) where *Load Size* (*calculated*) = 0.02484 *lbs / ms* * $\Delta t(ms)$ - 15.44*lbs*. The load size equation is predetermined and part of the control circuit 14. The $\Delta t$ value determined using elapsed time from timer 51 is with the load size equation to solve for load size. After operator 526, the method ends at operator 530.

One of ordinary skill in the art would understand that electrical systems, such as, for example an integrated motor control system for a horizontal axis washer, can be sensitive to environmental changes. These environmental changes introduce electrical noise and/or inefficiencies into the control circuit. In an exemplary alternate embodiment of the present invention, a compensation for noise factors and inefficiencies is performed to provide additional accuracy in calculating the load size. For example, dc bus voltage, temperature and load imbalance can introduce electrical noise and/or inefficiencies into the control circuit 14 for washer 10. In an alternate embodiment of the exemplary method of the present invention, illustrated with dashed lines at operator 528 of FIG. 5a,b, a compensation is performed for electrical noise and/or other electrical inefficiencies. After operator 528, operator 526 follows and load size is calculated using the load size equation such as, for example, equation (8) above.

Inefficiencies can be introduced by the dc bus 55 voltage, which may change substantially during a washer 10 cycle. The change in dc bus 55 voltage may impact the peak energy provided to motor 12 windings (not shown) and introduce error into the load size calculations. The dc bus 55 voltage is obtained, for example, using a potential transformer coupled to the dc bus 55 and input to an analog to digital (A/D) converter 66 of the microprocessor 61.

Another exemplary variable or noise, temperature of the motor 12, can introduce error into the load size calculation For example, motors made with aluminum windings have resistance that increases as the motor windings temperature increases. A motor with aluminum windings running hotter than room temperature may be running much less efficiently than a motor with aluminum windings running at room temperature. The inverter 64 includes a temperature sensor that indicates the heat near the inverter 64, and may thus be used to represent an approximation of the motor 12 winding temperature. A temperature sensor (not shown) provides a temperature representative of motor winding temperature to the microprocessor 61. One of ordinary skill in the art can determine which variable to use in compensating for noise and/or inefficiencies with respect to temperature. In the present example, motor winding temperature and/or heat proximate to the inverter 64 can be used. These examples are not meant to limit the compensation; other variables can be determined by one of ordinary skill in the art.

A further exemplary variable or noise is a load that is out of balance (OOB), where the energy from the OOB or imbalance is transferred into shock(s) to, or vibration of, the washer 10 that may cause inaccuracy in the load size calculation. Various calculations may be performed to determine the imbalance of the load in the washing machine basket or tub 25. These calculations provide a basis for ensuring that the load size calculation is not improperly affected by such an imbalance condition.

In summary, to compensate for noise parameters a normalization calculation uses an average elapsed time reading i.e. the time it takes for the rotating drum or moving tub 25 to change state, and applies the exemplary compensation calculation, explained in the exemplary embodiment above, to decrease the impact of the noise variables on the load size calculation. The result is a compensated elapsed time measurement that can be used in the load size calculation, such as a load size calculation using equation (8) above. It should be noted that while several exemplary noise factors such as electrical noise and/or inefficiencies are used for illustration purpose, other factors may be used as may be determined by one of ordinary skill in the art using designed experiments and regression techniques.

Returning to the flow chart of FIG. 5a,b and the query of operator 524, if the answer to the query of operator 524 is YES, then the method continues, at operator 532 the control circuit is operated in closed loop configuration, and the increment counter C is incremented by 1 at operator 534. Then operators 502 through 522 are repeated as described above.

In the exemplary embodiment of the present invention, motor 12 input voltage (frequency and amplitude) is adjusted such that motor 12 speed $S_{motor}$ and torque $T$ are likewise adjusted. The embodiment of the invention is carried out as follows: Speed of the induction motor 12 $S_{motor}$ is measured at predetermined times i.e. $t_1$, $t_2$, or at predetermined intervals of time i.e. $t_2 - t_1$. At various intervals, after load plastering, time $t$ is measured and load size is calculated using the motor control circuit 14 and the specific load size equation provided with the control circuit. The accuracy of the load size calculation is improved by operating the method multiple times (i.e. multiple iterations of the flow chart of FIG. 5a, b) and averaging the calculated load size. Additionally, resolution which corresponds to $\Delta t$ is increased with greater time differences $\Delta t$.

Exemplary Resolution is seen in the following two calculations of resolution factor from equation (5) above:

$$Resolution\ Factor = \frac{y}{x} = \frac{y_{known}}{\Delta t} = \frac{load\ size\ (known)}{\Delta t} \quad (13)$$

For a 20]b load, where $t_2$=750ms and $t_1$=500ms and the smallest measurable increment is 1 ms, the First Resolution Factor is:

$$Resolution\ Factor(1) = 20/(750-500) = 0.08 lbs/ms. \quad (14)$$

However, resolution can be increased where a greater time differential is obtained. For a 201b load, where $t_2$=1500ms and $t_1$=750ms, the Second Resolution Factor is:

$$Resolution\ factor(2) = 20/(1500-750) = 0.027 lbs/ms \quad (15)$$

Resolution Factor (2) allows the representation of load with 3 times greater resolution than Resolution Factor (1). It should be noted that improving resolution does not improve accuracy. With improved resolution, there are more decimal places as a result of calculations but accuracy is not improved. Improving resolution increases the number of load values that can be represented with the same inputs. For example, 0.08 lbs/ms allows us to represent 0 and 0.08 lbs. However, 0.027 lbs/ms allows us to represent 0,0.027,0.054 and 0.081 lbs. The numbers in this example are for purposes of explanation and are not meant to limit the load values or inputs to any particular numbers or any particular range of numbers. Values may be determined by one of ordinary skill in the art.

From the above calculations, it can be seen that the embodiment of the present invention avoids the use of dedicated weight sensors by quantifying time to reach stable speed and calculating load size multiple times to improve accuracy. Note that accuracy improves the correctness of the measurement but not the resolution in which that measurement is represented. The calculation of load size multiple times is illustrated in the flowchart of FIG. 5a,b where operators 502 through 522 are performed again if the answer to the query of operator 524 is YES. The calculated load size determined from multiple operations of the method of FIG. 5a,b can be added together and averaged in order to obtain a more accurate calculated load size. Empirical data for an exemplary embodiment of the present invention has lead to the conclusion that three operations of the method of FIG. 5a,b, for operators 502 through 522 results in suitable accuracy. The three operations can be performed, for example, through the use of an increment counter C of operator 501, and the repeat query 524 in the flowchart of FIG. 5a,b; alternately other embodiments may be determined by one of ordinary skill in the art. Other embodiments of the present invention may call for additional accuracy (more than 3 operations of the method steps) and additional operations of the method of FIG. 5a,b. The accuracy for other embodiments of the present invention can be determined by one of ordinary skill in the art. Hence, the three operations stated herein are not meant to limit the invention and other numbers of operations are suitable as determined by one of ordinary skill in the art.

FIG. 5c illustrates another exemplary method of the present invention. The method of FIG. 5c starts at 550 and includes 551, attain a speed at which the load is assumed to be plastered; 552, allow the speed to stabilize once the motor has reached the predefined speed (the speed at which the load is assumed to be plastered); 553, adjust the voltage such that an instantaneous frequency jump of the motor input voltage occurs (Note that the instantaneous frequency jump occurs in open loop mode since the nature of closed loop mode would prevent an instantaneous frequency jump). Operator 554, elapsed time is measured from instantaneous frequency jump until target speed is reached Next at 555, the load size is calculated using the measured elapsed time. At 556, a query is made as to whether the method is repeated. If the answer to the query is NO, then at 557 the method terminates. If the answer to the query 556 is YES then the method is repeated starting at 551.

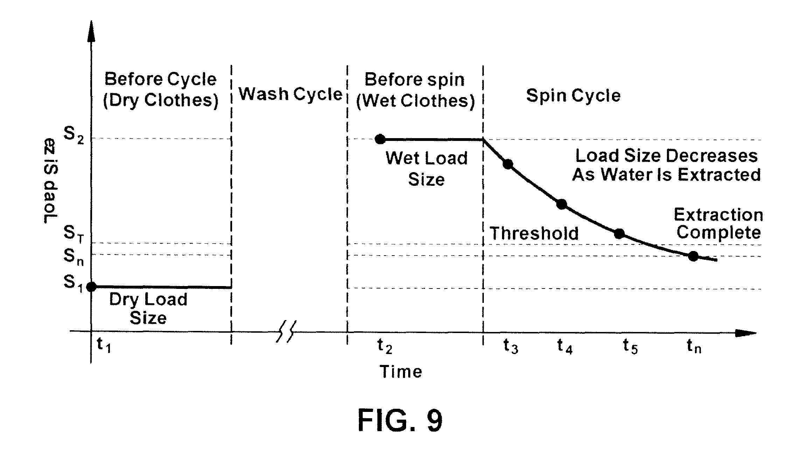

FIG. 9 illustrates an exemplary graph of load size vs. time including a theoretical load size plot representative of load variation over time for an exemplary embodiment of the present invention. Note that FIG. 9 illustrates that by determining changes in load size due to loss of liquid, i.e. water, during spin, the spin cycle speeds and/or time may be dynamically adjusted until the desired amount of water is extracted from the clothes. It should be noted that extraction of a liquid is generally discussed herein as water extraction; however, water is used as an example and is not meant to limit the invention.

This invention provides a way to estimate the amount of water extracted from a load, such as a washing machine load, during a spin cycle by using the load detection method discussed in the method of FIGS. 5a,b,c above including inverter 64 and motor 12 programming. The load detection process may be performed in various ways using common motor feedback data, for example, speed, torque, current, and power factor, etc. Load size may also be detected by using sensors. Alternately load size may be measured using mechanical measuring device to measure weight i.e. at least one strain gauge affixed to the washer as may be determined by one of ordinary skill in the art. In an alternate embodiment the washer could be arranged with suitable measurement device 13 (shown in FIG. 3) such as a scale retrofitted to the shock absorbers (not shown) in a washer; one of ordinary skill in the art could determine what type of mechanical device could be used for measurement in a washer.

The primary method of detecting load size for this invention uses speed feedback discussed above with respect to FIG. 4 functional block diagram and FIGS. 5a,b and 5c flowcharts. FIG. 9 illustrates, in an exemplary embodiment of the present invention, the points at which load size is determined and with which water amount in the load can be determined. To detect the amount of extracted water, first, at $t_1$ of FIG. 9, the dry load size $S_1 = $ *dry load size* is calculated at the beginning of the wash cycle. Then the wet load size $S_2 = $ *wet load size* is calculated, after the wash cycle (which can include, for example, an agitate phase) at $t_2$ of FIG. 9, which is, for example, before the spin cycle.

Finally, during the spin cycle illustrated in FIG. 9, the present load $S_3, S_4, S_5$ size is intermittently calculated (at $t_3, t_4, t_5$) and compared with the dry $S_1$ and wet load sizes $S_2$ (previously calculated at $t_1, t_2$, respectively) to determine the amount of water that has been extracted. Once a desired or predetermined amount of water is extracted, the spin cycle is determined to be complete and the washer may be stopped.

Spin cycles typically run for a pre-determined amount of time based on generic information such as a user selected load size (i.e. small, medium, large). The exemplary embodiment of the present invention provides for dynamic adjustment of washer spin by detecting the amount of water that has been extracted at least one time point $t_3, t_4, t_5$. By determining change in load size due to loss of water during spin (i.e. $S_2-(S_3 or S_4 or S_5)$), the spin cycle speeds and/or time may be dynamically adjusted until a desired amount of water is extracted from the clothes.

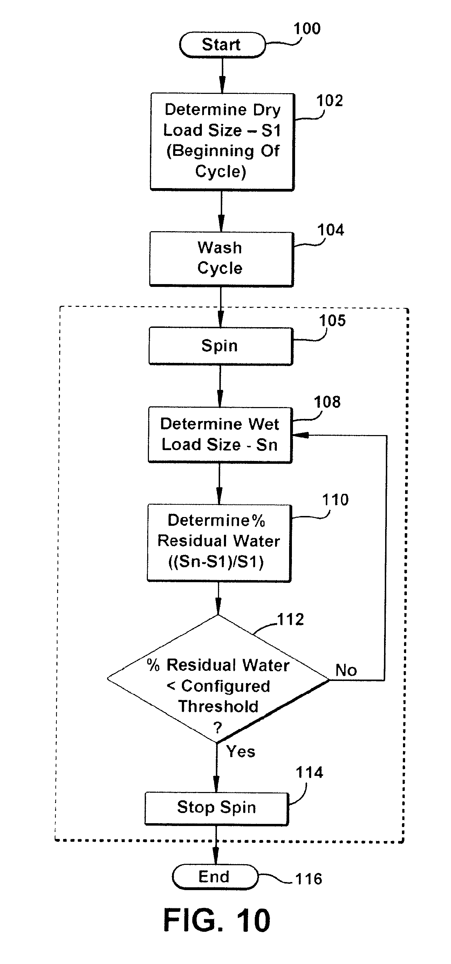

FIG. 10 is a flowchart illustrating an exemplary embodiment of the present invention. At 100 the method begins. At 102 a dry load size $S_1$ is measured. The Dry Load Size $S_1$ is determined at the beginning of the wash start, before water or liquid is added. Next, preparation symbol 104 represents a wash cycle. At 106, spin is performed. It should be noted that dotted line 105 indicates a dynamic spin cycle is performed. The length of the spin cycle may be reduced by detecting when an amount of liquid remaining in the load falls below 50% of the total load or below a predetermined percentage threshold. The threshold may be adjusted based on load type, such as heavy or light loads, various fabric type loads i.e. terry cloth, cotton or mixed fabric loads. At 108, wet load size $S_n$ is measured. At 110 percent residual water $(S_n-S_l)/S_n)$ is determined. This determines a which portion of the load size is residual water as a percentage of the wet load size. To get this percentage, divide the water load size by the total wet load size. The liquid load size and percent residual liquid are calculated using equations such as the following:

$$Liquid\ Load\ Size = Wet\ Load\ Size - Dry\ Load\ Size \qquad (16)$$

$$Percent\ \mathrm{Re}\,sidual\ Liquid = Liquid\ Load\ Size / Wet\ Load\ Size \quad (17)$$

Returning to FIG. 10, next at 112 a query is made as to whether the percent residual water is less than a predetermined percentage threshold. If the answer to the query is NO, then the method returns to 108 through 112 as previously described. If the answer to the query is YES, then the method proceeds to 114 and spin is stopped. Next at 116, the method ends.

Advantages of the present invention includes advantages in the exemplary embodiments presented herein, including: 1) Spin cycle speed and duration may be dynamically adjusted based on amount of extracted water; 2) special sensors may or may not be used, hence affording flexibility; 3) re-use of data determined in a method described in FIGS. 5a,b and c herein; 4) water extraction has increased effectiveness due to measurement during extraction; 6) washer cycle time is reduced; 7) power consumption can be reduced if water extraction time is reduced; 8) load wear is reduced when water extraction time is reduced (i.e. less wear on clothes due to shorter spin times and/or lower spin speeds); and 9) increased marketability due to the benefits of the water extraction feature.

The exemplary embodiments of the present invention implement methods using firmware and related hardware to determine changes in load size. The present invention is implemented herein in exemplary washers; one of ordinary skill in the art would recognize that the present invention could be implemented in other apparatus with rotational loads. While motor speed is used herein to determine load size, determining water extraction by measurement of load via any of the various electrical properties of the washer motor 12 or drive can be performed by one of ordinary skill in the art using the present invention. The exemplary embodiments of the present invention are implemented as at least one software component in the inverter 64 and motor 12 of the washing machine.

In addition to the accomplishment discussed above, this exemplary embodiment of the present invention accomplishes load detection through the adjustment of output voltage from the control circuit or integrated motor control so that the tub speed reaches various speeds and the time between speed increments is measured.

In addition to the accomplishment discussed above, this exemplary embodiment of the present invention accomplishes load detection through the use of time measurement and speed feedback after applying a substantially instantaneous frequency jump. The substantially instantaneous frequency jump(s) described herein are frequency changes wherein the frequency change from the first input voltage to the second input voltage is substantially instantaneous negative or positive frequency change. Note that while the use of speed feedback is discussed more prevalently with regard to closed loop mode, even in open loop mode, speed feedback is used. In open loop mode speed feedback is used to determine when the speed is stable; speed feedback is not used for speed control in the embodiments of the invention described herein. However, the PI controller is disabled so the microprocessor 61 will not automatically adjust the voltage input 58 to the motor 12. In open loop mode, the voltage amplitude and frequency are controlled manually. In closed loop mode, the voltage amplitude and frequency are automatically controlled using a PI controller with speed error as the input. Measurements can be performed by the exemplary method of the present invention in a substantially instantaneous frequency jump when the control circuit is operating in open loop mode.

Advantages to the embodiments of the present invention include that cost is reduced because various, prior art components are not required. Additionally the exemplary method of the present invention can be performed on a dry load or a wet load. Dedicated sensors are not used in the exemplary embodiments of the present invention; time and speed are measured and/or calculated, hence there is a cost reduction in materials per unit. The exemplary method of the present invention accomplishes load detection by transitioning between open and closed loop modes. The method also accomplishes the adjustment of constants "on the fly" or during the operation of the washer so that load measurement is tuned to washer settings (e.g. fabric type, user selected load size, etc.). Resolution is enhanced by lowering torque and accuracy is enhanced by repeating portions of the method multiple times. Calibration functionality for a particular washer can be part of the method stored in the washer control circuit; hence calibration is "built in" to the washer in some embodiments. The present invention can be performed in both horizontal axis and vertical axis washers, as may be determined by one of ordinary skill in the art.

The aforementioned embodiments of the present invention use an exemplary motor platform that is an AC induction motor. In an alternate embodiment of the present invention a different motor platform that is not an AC Induction motor may be used. One of ordinary skill in the art could determine an appropriate motor platform for the present invention. It should be noted that the control circuit 14 could be a circuit other than a circuit of a commercially available integrated motor and control.

The exemplary inventions discussed herein accomplish load detection by elimination of components such as pressure switches or pressure transducers, (for example, pressure switch coupled to the tub when the tub is still) and associated circuitry to determine load size and/or by the use of an adaptive circuit that provides for consistent operation of the washing machine over varying frequency and amplitude electrical input.

It should also be noted that the terms "first", "second", "third", "upper", "lower", and the like may be used herein to modify various elements. These modifiers do not imply a spatial, sequential, or hierarchical order to the modified elements unless specifically stated.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

**Claims**

1. A method of determining a measurement of a portion of a load in a basket (25) that is rotatably supported where the basket (25) that is rotatably supported defines at least one aperture, the method comprising:

    a) determining, at a first time, a dry load measurement;
    b) spinning, at a time after the first time, the basket (25) that is rotatably supported in order to gradually remove the liquid from the load, wherein the liquid is removed substantially by centrifugal force on the basket (25) that is rotatably supported and wherein liquid exits the basket (25) that is rotatably supported, through the at least one aperture of the is rotatably supported basket (25);
    c) determining at a second time, a wet load measurement, wherein the dry load measurement is less than the wet load measurement and;
    d) comparing the dry load measurement to the wet load measurement to determine a remaining liquid measurement; and
    e) repeating c) and d) until the remaining liquid measurement substantially is within a predetermined percentage threshold of about 0 percent to about 50 percent of the wet load measurement.

2. The method of claim 1, wherein in e) the predetermined percentage threshold is dynamically configurable by a user based upon load type.

3. The method of claim 1 or claim 2, wherein the wet load measurement and dry load measurement made at the first time and the second time each comprise:

    a) accelerating the basket (25) that is rotatably supported to a stable rotational speed;
    b) measuring a time for the basket (25) that is rotatably supported to reach the stable rotational speed;
    c) providing a load size equation comprising an input substantially equal to a measured time that the basket (25) that is rotatably supported reaches the stable rotational speed; and
    d) determining a load size using the load size equation.

4. The method of any one of the preceding claims, wherein the wet load measurement and dry load measurement are made using a mechanical measuring device (13) operatively connected to the basket (25) that is rotatably supported.

5. A washer comprising:

    a tub (22) having a load therein and the tub (22) being configured to receive a liquid therein and to remove the liquid therefrom; and
    a control circuit (14) configured to execute a load measurement formula used to determine a measurement of the load with and without the liquid in the tub (22);

    wherein a dry load measurement without the liquid and a wet load measurement with the liquid are taken at first and second times, respectively, are used to determine a remaining liquid measurement, and wherein the wet load measurement is thereafter repeated as liquid is removed from the tub (22) and additional remaining liquid measurements are carried out based on the repeated wet load measurements until the remaining liquid measurement substantially is within a predetermined range of between about 0 percent to about 50 percent of the wet load measurement.

6. The device of claim 5, wherein the tub (22) is spinable and control circuit (14) is further configured to control the spinning of the tub (22) until the remaining liquid measurement is within the predetermined range.

7. A computer program product comprising: a program storage device readable by a circuit interrupter, tangibly embodying a program of instructions executable by the circuit interrupter to perform method of determining a measurement of a portion of a load in a basket (25) that is rotatably supported where the basket (25) that is rotatably supported defines at least one aperture, the method comprising:

one aperture, the method comprising:

a) determining, at a first time, a dry load measurement;
b) spinning, at a time after the first time, the basket (25) that is rotatably supported in order to gradually remove the liquid from the load, wherein the liquid is removed substantially by centrifugal force on the basket (25) that is rotatably supported and wherein liquid exits the basket (25) that is rotatably supported, through the at least one aperture of the is rotatably supported basket (25) ;
c) determining at a second time, a wet load measurement, wherein the dry load measurement is less than the wet load measurement and;
d) comparing the dry load measurement to the wet load measurement to determine a remaining liquid measurement; and
e) repeating c) and d) until the remaining liquid measurement substantially is within a predetermined percentage threshold of about 0 percent to about 50 percent of the wet load measurement.

**FIG. 1**

Fig. 3

Fig. 2

FIG. 4

EP 2 056 079 A2

500 — START

501 — INITIALIZE INCREMENT COUNTER

502 — DRIVE WASHER MOTOR USING CLOSED LOOP CONTROL CIRCUIT UNTIL SPEED REACHES ASSUMED SPEED (RPM) IS SUFFICIENT TO PLASTER LOAD

504 — IS PLASTER SPEED ACHIEVED ? — NO / YES

506 — OPERATE CONTROL CIRCUIT WITH FEEDBACK CONTROL IN OPEN LOOP CONFIGURATION

CONTROL CIRCUIT USED TO PROVIDE A FIRST PREDETERMINED $V_{Input1}$ MOTOR AT X1 FREQUENCY Y1 AMPLITUDE

508

510 — STABLE SPEED? — NO / YES

512 — FEEDBACK CONTROL LOOP REMAINS OPENED

**FIG. 5a**

534 — INCREASE INCREMENT COUNTER BY ONE

532 — OPERATE FEEDBACK CONTROL CIRCUIT IN CLOSED LOOP CONFIGURATION

YES

524 — REPEAT METHOD ? — NO — (A)

522 — OBTAIN ELAPSED TIME READING SUM AND AVERAGE ELAPSED TIME READING

520 — STOP TIMER AND TIME READING DETERMINED

YES

518 — STABLE SPEED? — NO

516 — START TIMER

514 — CONTROL CIRCUIT USED TO PROVIDE A SECOND PREDETERMINED $V_{Input2}$ TO MOTOR AT X2 FREQUENCY Y2 AMPLITUDE

Δt

COMPENSATE FOR
"NOISE FACTORS" 528

A

CALCULATE LOAD SIZE USING AVERAGE
ELAPSED TIME AND LOAD SIZE EQUATION 526

END 530

## FIG. 5b

START 550

motor has reached the predefined
speed (the speed at which the load is
assumed to be plastered) 551

the speed stabilizes after the motor has
reached the predefined speed (the
speed at which the load is assumed to
be plastered) 552

adjust the motor input voltage such that an
instantaneous frequency jump of the motor
input voltage occurs 553

Measure time elapsed from
instantaneous frequency jump until
target speed is reached 554

Repeat? 556     YES

NO

Perform load calculation using elapsed time 555

End 557

## FIG. 5c

Motor Control

Frequency
(Speed Adjustment)

Amplitude
(Torque Adjustment)

Voltage

Time

FIG. 6

**FIG. 7a**

**FIG. 7b**

LINE L EQUATION: y = mx + b

FIG. 8

FIG. 9

EP 2 056 079 A2

FIG. 10